# EUROPÄISCHE PATENTSCHRIFT

(11) **EP 0 502 854 B1**
(45) Veröffentlichungstag und Bekanntmachung des Hinweises auf die Patenterteilung: **18.05.1994**
(21) Anmeldenummer: 90915091.4
(22) Anmeldetag: 25.10.1990
(51) Int. Cl.: G06F 1/08, G06F 1/24

(54) **SCHALTUNGSANORDNUNG ZUR FREQUENZVERSORGUNG EINER RECHENSCHALTUNG**
CIRCUIT ARRANGEMENT FOR PROVIDING A FREQUENCY FOR A COMPUTER CIRCUIT
AGENCEMENT DE CIRCUIT POUR L'ALIMENTATION EN FREQUENCES D'UN CIRCUIT DE CALCUL

(30) Priorität: 09.12.1989 DE 3940745
(43) Veröffentlichungstag der Anmeldung: 16.09.1992
(73) Patentinhaber: ROBERT BOSCH GMBH, 70442 Stuttgart (DE)
(72) Erfinder: GRAETHER, Günter, D-7131 Wiernsheim/Pinache (DE); JUNDT, Werner, D-7140 Ludwigsburg (DE); KAISER, Günther, D-7000 Stuttgart 40 (DE)
(86) Internationale Anmeldenummer: DE9000810
(87) Internationale Veröffentlichungsnummer: WO9109361

(56) Entgegenhaltungen:
- EP-A- 0 286 879
- US-A- 4 868 525

## Beschreibung

### Stand der Technik

Die Erfindung geht aus von einer Schaltungsanordnung zur Frequenzversorgung einer Rechenschaltung nach der Gattung des Hauptanspruchs. Aus der DE-OS 31 19 117 ist bereits eine Schaltungsanordnung zum Rücksetzen von Mikroprozessoren vorgeschlagen worden, bei der zum Rücksetzen das Ausgangssignals des Taktgenerators Verwendung findet. Das Ausgangssignal des Taktgenerators wird dabei gleichgerichtet und dem Rücksetzeingang des Mikroprozessors zugeführt. Beim Einschalten der Versorgungsspannung wird der Rücksetzvorgang des Mikroprozessors erst dann beendet, wenn der Taktgenerator des Mikroprozessors bereits angeschwungen ist. Dadurch werden zwar sicher undefinierte Zustände vermieden, die beispielsweise dann auftreten können, wenn der Mikroprozessor spannungsabhängig zurückgesetzt wird, jedoch der Taktgenerator nicht angeschwungen ist, jedoch dauert ein solcher Rücksetzvorgang unter Umständen recht lange, insbesondere wenn nur langsam anschwingende Generatoren, beispielsweise Quarzoszillatoren, verwendet werden. Weiterhin ist mit dem Microcontroller 80C 517 der Fa. Siemens eine Schaltung bekannt geworden, die neben einem Quarzoszillator einen RC-Oszillator aufweist, der zur Überwachung des Quarzoszillators dient.

Aus der EP-A 286 879 ist eine integrierte Schaltungsanordnung zur Überwachung eines mitintegrierten Oszillators bekannt, bei der neben einem Quarzoszillator ein Reserveoszillator vorgesehen ist, dessen Maximalfrequenz unter der Minimalfrequenz des Quarzoszillators liegt. In einem Frequenzvergleicher wird die Frequenz des Reserveoszillators mit der Frequenz des Quarzoszillators verglichen. Fällt bei einer Fehlfunktion des Quarzoszillators die Frequenz dieses Oszillators unter die Frequenz des Reserveoszillators, so wird der Takt für den Funktionsablauf der integrierten Schaltung nunmehr vom Reserveoszillator abgeleitet, um ein unkontrolliertes Zusammenbrechen des über die integrierte Schaltung gesteuerten Systems oder Prozesses auszuschließen.

### Vorteile der Erfindung

Die erfindungsgemäße Schaltungsanordnung mit den kennzeichnenden Merkmalen des Hauptanspruchs hat demgegenüber den Vorteil, daß eine sehr schnelle Inbetriebnahme der Rechenschaltung zu erreichen ist, da die Rechenschaltung zuerst mit einem sehr schnell anschwingenden, aber eventuell bezüglich der Frequenz unstabileren Oszillator betrieben wird und danach erst auf einen langsam anschwingenden Oszillator, vorzugsweise einen Quarzoszillator, umgeschaltet wird, dessen Anschwingdauer länger ist. Durch diese Maßnahme wird erreicht, daß beim Auftreten der Versorgungsspannung eine sehr schnelle Inbetriebnahme der Rechenschaltung möglich wird, so daß beispielsweise der Initialisierungsvorgang der Rechenschaltung bereits abgeschlossen ist, wenn auf den Quarzoszillator umgeschaltet wird. Die erfindungsgemäße Maßnahme ermöglicht neben der schnellen Inbetriebnahme der Rechenschaltung auch eine sichere Inbetriebnahme, da auch hier in bekannter Weise nach dem Schwingen des schnell anschwingenden Oszillators die Rechenarbeit aufnehmbar ist.

Durch die in den Unteransprüchen aufgeführten Maßnahmen sind vorteilhafte Weiterbildungen und Verbesserungen der im Hauptanspruch angegebenen Schaltungsanordnung möglich. Besonders vorteilhaft ist es, eine Vergleichsanordnung vorzusehen, in der die Ausgangssignale des langsam anschwingenden Oszillators mit den Ausgangssignalen des schnell anschwingenden Oszillators verglichen werden und eine Umschaltung des Quarzoszillators dann erfolgt, wenn die Frequenz z.B. des Quarzoszillators im Bereich der Frequenz des schnell anschwingenden Oszillators liegt. In diesem Falle ist in besonders einfacher Art und Weise sicherzustellen, daß zum Umschaltzeitpunkt der langsam anschwingende Oszillator bereits im eingeschwungenen Betriebszustand ist, so daß die Rechenschaltung nach der Umschaltung sofort mit dem Quarzoszillator als Taktgeber weiter arbeiten kann. Die Umschaltung erfolgt daher dann, wenn der Quarzoszillator bereits betriebsbereit ist. Vorteilhaft ist es ebenfalls, eine Spannungsüberwachungsanordnung vorzusehen, aufgrund der die Oszillatoren erst dann in Betrieb genommen werden bzw. freigeschaltet werden, wenn die Spannung einen vorgegebenen Wert erreicht hat. Durch diese Maßnahme wird erreicht, daß zu niedrige Signale der Oszillatoren keine Fehlfunktion der Rechenschaltung auslösen. Vielmehr werden die Oszillatoren erst dann freigegeben, wenn sichergestellt ist, daß zumindest der schnell anschwingende Oszillator in der Lage ist, ein brauchbares Frequenzsignal abzugeben.

Weiterhin ist es vorteilhaft, das zum Rücksetzen der Rechenschaltung benötigte Rücksetzsignal direkt aus den Ausgangssignalen der Oszillatoren dadurch zu generieren, daß bei abgeschalteten bzw. nicht angeschwungenen Oszillatoren das für die Rechenschaltungen benötigte Rücksetzsignal in den Zustand "aktiv", d.h. den Rücksetzvorgang der Rechenschaltung einleitend, gesetzt wird und daß der Zustand "aktiv" des Rücksetzsignals auch nach Anschwingen einer der beiden Oszillatoren noch für eine bestimmte Mindestanzahl von Oszillatorperioden beibehalten und erst dann das Rücksetzsignal in den Zustand "aktiv" gebracht wird. Eine üblicherweise für den Rücksetzvorgang der Rechenschaltung zusätzlich benötigte Rücksetzschaltung, welche in Abhängigkeit vom Vorliegen der Versorgungsspannung ein Rücksetzsignal bestimmter Zeitdauer erzeugt, kann damit entfallen.

Weiterhin ist es günstig, dem Quarzoszillator einen Zähler nachzuschalten, der bei einem vorgegebenen Zählerstand den Umschalter betätigt. Durch diese Maßnahme ist eine besonders einfache Erkennung des angeschwungenen Quarzoszillators möglich.

### Zeichnung

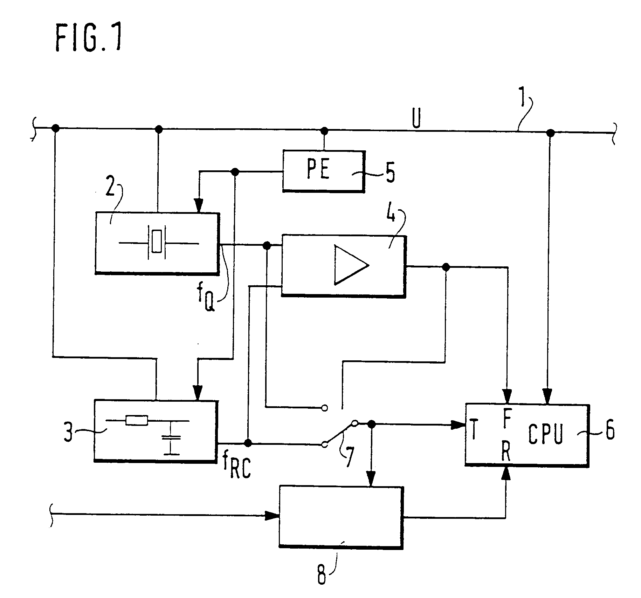

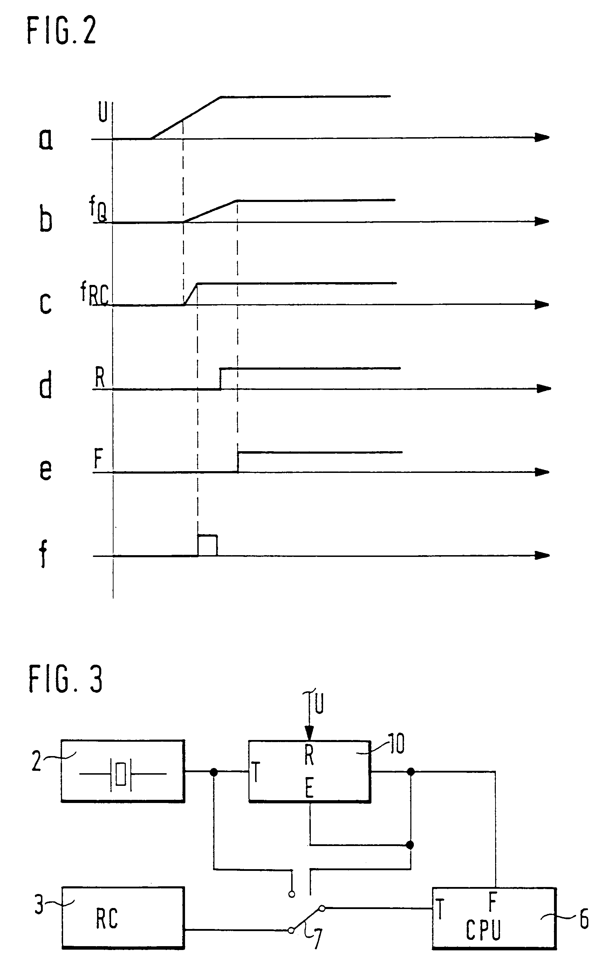

Ein Ausführungsbeispiel der Erfindung ist in der Zeichnung dargestellt und in der nachfolgenden Beschreibung näher erläutert. Es zeigen Figur 1 die Schaltungsanordnung eines Ausführungsbeispiels der Erfindung, Figur 2 ein Impulsdiagramm zur Erläuterung der Funktionsweise der Schaltungsanordnung nach Figur 1 und Figur 3 ein weiteres Ausführungsbeispiel der Erfindung.

### Beschreibung des Ausführungsbeispieles

In Figur 1 ist mit 1 die Versorgungsspannungsleitung bezeichnet, an der die Versorgungsspannung U anliegt. Mit 2 ist ein Quarzoszillator gekennzeichnet, der von der Versorgungsspannungsleitung 1 mit der Versorgungsspannung versorgt wird. Der Ausgang des Quarzoszillators mit der Ausgangsfrequenz f_{Q} ist einerseits mit einem Eingang eines Vergleichers 4 und andererseits mit einem Kontakt des Schalters 7 verbunden. Des weiteren ist ein schnell anschwingender Oszillator 3 z.B. ein RC-Oszillator, vorgesehen, der seinerseits ebenfalls mit der Versorgungsspannungsleitung 1 verbunden ist. Der schnell anschwingende RC-Oszillator 3 weist ebenfalls einen Frequenzausgang auf, der einerseits mit einem weiteren Eingang des Vergleichers 4 und andererseits mit einem weiteren Eingang des Schalters 7 verbunden ist. An diesem Frequenzausgang liegt die Frequenz f_{RC} an. Der Ausgang des Vergleichers 4 ist mit dem Schaltkontakt des Schalters 7 verbunden, der seinerseits mit dem Frequenzeingang einer Rechenschaltung 6 verbunden ist. Des weiteren ist der Ausgang des Vergleichers 4 auch mit einem weiteren Abfrageeingang F der Rechenschaltung 6 verbunden. Auch die Rechenschaltung 6 wird durch die Versorgungsspannung von der Versorgungsspannungsleitung 1 versorgt. Schließlich weist die Schaltungsanordnung gemäß Figur 1 noch eine Spannungsüberwachungseinheit 5 auf. Die Spannungsüberwachungseinheit 5 gibt an ihrem Ausgang Signale zu den Oszillatoren 2 und 3, die erst dann auftreten, wenn eine vorgebbare Mindest-Versorgungsspannung an der Spannungsleitung 1 bereitsteht. Durch die Signale der Spannungsüberwachungseinrichtung 5 ist es möglich, den Ausgang der Oszillatoren 2 und 3 abzuschalten, wenn nicht eine vorgegebene Mindestspannung an der Spannungsüberwachungseinrichtung 5 anliegt oder aber die Spannungszufuhr zu den Oszillatoren 2 und 3 zu unterbrechen.

Der Ausgang des Schalters 7 ist weiterhin mit dem Rücksetzschaltkreis 8 verbunden, dessen Ausgang mit dem Rücksetzeingang R der Rechenschaltung 6 verbunden ist. Der Ausgang des Rücksetzschaltkreises 8 bleibt solange in seinem aktiven, das Rücksetzen der Rechenschaltung 6 einleitenden Zustand, bis eine vorgebbare Anzahl von Oszillatorschwingungen, die zumindest der Anzahl der Takte der Grundinitialisierung entspricht, am Anfang des Schalters 7 aufgetreten ist.

Über den weiteren Eingang Reset der Rückschaltung 8 kann darüber hinaus der Rücksetzeingang R ebenfalls in den aktiven Zustand gebracht werden.

Die Funktionsweise der Schaltungsanordnung gemäß Figur 1 sei anhand der Diagramme gemäß Figur 2 näher erläutert. Nach einem Spanungszusammenbruch oder beim Einschalten des Gerätes tritt an der Versorgungsspannungsleitung 1 ein Spannungsaufbau auf, wie er beispielhaft in Figur 2a dargestellt ist. Die Spannung steigt hier vom Nullwert langsam auf seinen Maximalwert an. Ist die vorgegebene Mindest-Versorgungsspannung erreicht, so wird durch die Spannungsüberwachungseinrichtung 5 die Versorgungsspannung zu den Oszillatoren 2 und 3 freigeben, so daß sowohl der Quarzoszillator anschwingt, wie dies in Figur 2b dargestellt ist als auch der RC-Oszillator, wie dies in Figur 2c dargestellt ist. Da der RC-Oszillator 3 wesentlich schneller seine Betriebsfrequenz erreicht, ist es möglich, die Rechenschaltung 6 zur Initialisierung gemäß Figur 2f. bereits dann in Betrieb zu nehmen, wenn der RC-Oszillator angeschwungen ist. Mit der ansteigenden Flanke des Signals gemäß Figur 2d ist es dann möglich, die Rechenschaltung in Betrieb zu nehmen, da Initialisierungsvorgänge des Rechenbausteins abgearbeitet sind.

In der Vergleichseinrichtung 4 werden die Ausgangsfrequenzen des Quarzoszillators 2 und des RC-Oszillators 3 miteinander verglichen. Als solche Vergleichseinrichtung sind beispielsweise übliche Zählvorrichtungen möglich, die nach einer gewissen Zeit digitale Werte an ihrem Ausgang abgeben, deren Wertestand miteinander verglichen werden kann. Ist nun die Frequenz des Quarzoszillators unter der Frequenz des RC-Generators, so wird davon ausgegangen, daß der Quarzoszillator noch nicht ordnungsgemäß eingeschwungen ist. Erreicht die Frequenz des Quarzoszillators die Frequenz des RC-Oszillators oder übersteigt diese, wird davon ausgegangen, daß der Quarzoszillator nunmehr seinen Arbeitsbereich erreicht hat. Am Ausgang des Vergleichers 4 wird nun ein Signal abgegeben, so daß gemäß Figur 2e nunmehr das Signal des Quarzoszillators zur Rechenschaltung 6, die vorteilhaft als Mikroprozessor ausgebildet ist, geleitet wird, während das Signal des RC-Oszillators abgeschaltet wird. Gleichzeitig wird gemäß Figur 2e ein Eingang F der Rechenschaltung 6 umgeschaltet, so daß von der Rechenschaltung 6 abfragbar ist, welcher Oszillator in Betrieb ist.

Wie ein Vergleich zwischen Figur 2f und 2e zeigt, ist es durch die erfindungsgemäße Maßnahme möglich, die Rechenschaltung 6 beim Wiedereintreten der Versorgungsspannung auf der Leitung 1 frühzeitiger in Betrieb zu nehmen, als dies dann der Fall wäre, wenn lediglich ein Quarzoszillator vorhanden ist.

Nach Beendigung der Initialisierungsphase (abfallende Flanke gemäß Figur 2f) kann die Recheneinheit sofort das Rechenprogramm aufnehmen, da dann der Rücksetzeingang R nach einer vorgegebenen Anzahl von Impulsen durch den Rücksetzschaltkreis 8 gemäß Figur 2d freigegeben wird. Stehen zeitabhängige Programme an, kann durch Abfrage des Eingangs F festgestellt werden, ob der Quarzoszillator 2 schon eingeschaltet ist und die Frequenz stabil ist. Andernfalls wären weniger zeitabhängige Programme bevorzugt abzuarbeiten oder das Programm kann in einer Schleife laufen, bis der Quarzoszillator 2 eingeschaltet wird. Weiterhin kann ein Anlaufen des Programms bei nicht ordnungsgemäß arbeitendem Quarzoszillator 2 verhindert werden oder aber auf ein entsprechendes Notprogramm umgeschaltet werden.

Die Frequenz des RC-Oszillators 3 wird zweckmäßigerweise so gewählt, daß sie knapp unterhalb der Frequenz des eingeschwungenen Quarzoszillators liegt. Dadurch wird erreicht, daß die Amplitude des Quarzoszillators nicht mehr überwacht werden muß. Vielmehr kann davon ausgegangen werden, daß der Quarzoszillator nur dann ordnungsgemäß arbeitet, wenn er die Frequenz des RC-Oszillators überschreitet, so daß ein rein digitaler Vergleich im Vergleicher 4 hinreichend ist. Die vorgegebene Dauer zur Verbindung des Quarzozillators 3 mit der Rechenschaltung 6 wird dann vom Vergleicher 4 bestimmt.

Aufgrund der digitalen Ausgestaltung des Vergleichers ist es möglich, die gesamte Schaltungsanordnung mit in die Recheneinheit zu integrieren, da abgesehen von der Frequenzaufbereitung der Oszillatoren lediglich digitale Bauelemente Verwendung finden. Die gesamte Schaltungsanordnung ist daher in Verbindung mit dem Mikroprozessor leicht auf einem gemeinsamen Chip aufzubauen, so daß die Schaltungsanordnung in der Rechenschaltung 6 mit angeordnet sein kann.

Prinzipiell ist es sogar möglich, auf den Vergleicher 4 ganz zu verzichten. In diesem Fall ist ein Zeitglied vorzusehen, das nach einer vorgegebenen Dauer, die mindestens so lang ist, wie der Quarzoszillator üblicherweise zum Anschwingen braucht, den Schalter 7 umschaltet, so daß dann der Quarzoszillator die Versorgung der Rechenschaltung übernimmt. Hierzu ist ein einfaches Zeitglied ausreichend, so daß die Schaltungsanordnung gemäß Figur 1 noch weiter zu vereinfachen ist. Jedoch ist dann kein Notbetrieb der Recheneinheit möglich, da bei der Ausgestaltung gemäß Figur 1 die Rechenschaltung auch dann noch arbeitet, wenn beispielsweise aufgrund von Defekten der Quarzoszillator oder der RC-Oszillator nicht anschwingen. Durch die Vergleichseinrichtung wird nämlich nicht umgeschaltet, wenn der Quarzoszillator nicht anschwingt bzw. die Recheneinrichtung wird lediglich verzögert in Betrieb genommen, falls der schnell anschwingende Oszillator seinen Betrieb nicht aufnimmt. Durch die Schaltungsanordnung wird daher durch die Redundanz zusätzlich eine erhöhte Betriebssicherheit erreicht.

Die Schaltungsanordnung gemäß Figur 1 ist insbesondere dort vorteilhaft einsetzbar, wo es auf eine schnelle Echtzeitverarbeitung beim Betrieb von Maschinen und Geräten ankommt, beispielsweise bei dem Betrieb von Steuergeräten von Kraftfahrzeugen, wo die erhöhten Umweltanforderungen eine erhöhte Belastbarkeit der Bauelemente und der einzelnen Baugruppen voraussetzen. Gleichzeitig wird insbesondere bei Steuergeräten im Kraftfahrzeug erwartet, daß sie nach Einschalten der Batteriespannung beim Drehen des Zündschlüssels sehr schnell in einem betriebsbereiten Zustand gelangen, was durch die Schaltungsanordnung gemäß Figur 1 zu realisieren ist.

Ein weiteres einfaches Ausführungsbeispiel zur Erkennung des Quarzoszillators ist der Figur 2 zu entnehmen, in der lediglich die zu Figur 1 geänderten Teile aufgezeigt sind. Der Quarzoszillator 2 sowie der RC-Oszillator 3 stehen jeweils wiederum mit einem Eingang des Umschalters 7 in Verbindung, wobei bei fehlender Versorgungsspannung der Umschalter 7 den Takteingang T der Rechenschaltung 6 mit dem Ausgang des RC-Oszillators 3 verbindet. Der Ausgang des Quarzoszillators 2 ist desweiteren an den Takteingang eines Zählers 10 geführt, der bei schwingendem Quarzoszillator den Zähler 10 aufwärts zählt. Ist ein vorgegebener Zählerstand erreicht, so schaltet der Zähler an seinem Ausgang um und betätigt damit den Schalter 7. Gleichzeitig wird an einem Eingang F der Rechenschaltung 6 ein Signal umgeschaltet, so daß durch die Rechenschaltung zu erkennen ist, welcher Oszillator eingeschaltet ist. Das gleiche Signal dient über den Eingang E des Zählers 10 dazu, den Tankteingang des Zählers zu sperren, so daß weitere Taktimpulse des Quarzoszillators nicht mehr an den Zähler gelangen können. Der Zähler verharrt daher in dem vorgegebenen Zählerstand, der zum Umschalten des Schalters 7 führt, bis aufgrund eines Einbruchs der Versorgungsspannung an seinem Eingang R ein Rücksetzsignal ausgelöst wird, so daß der Zähler wiederum, beispielsweise vom Wert 0, hochzählen kann.

Durch diese Maßnahme ist ebenfalls eine sehr einfache Möglichkeit zum Erkennen des Anschwingens des Quarzoszillators möglich. Ist der Quarzoszillator noch nicht ordnungsgemäß angeschwungen oder ist die Amplitude seiner Signale noch klein, wird der Zähler 10 nicht ansprechen. Spricht der Zähler 10 an, so ist noch nicht damit zu rechnen, daß der Quarzoszillator seine Nennfrequenz und seine Amplitude erreicht hat. Aus diesem Grund werden während einer vorgegebenen Zeit, die durch den Zählwert des Zählers 10 bestimmt ist, die Signale des Quarzoszillators gezählt und nach einem vorgegebenen Zählerstand umgeschaltet. Durch diese Maßnahme wird ebenfalls erreicht, daß der Quarzoszillator sehr schnell in Betrieb genommen wird, nämlich dann, wenn er aufgrund des Zählerstandes im Zähler 10 seinen Arbeitsbereich erreicht hat.

Die Verbindung vom Ausgang des Zählers 10 bzw. vom Ausgang des Vergleichers 4 zum Eingang F der Rechenschaltung ist da nicht notwendig, wo zeitunabhängig Programme ablaufen müssen. In diesem Falle kann diese Leitung entfallen, da es dann gleichgültig ist, ob der Rechner einen relativ konstanten oder einen weniger konstanten Takt erhält. Sind jedoch zeitkritische Vorgänge im Programm abzuarbeiten, beispielsweise Programme die im Kraftfahrzeug den Zündzeitpunkt oder den Einspritzzeitpunkt bestimmen, so dürfen diese Programme nicht bearbeitet werden, solange noch ein relativ unstabiler Takt am Eingang der Recheneinheit liegt. In diesem Falle ist vorher das Signal am Eingang F abzufragen und diese Programme nur dann freizugeben, wenn der stabile Takt bereits eingeschaltet ist.

## Patentansprüche

1. Schaltungsanordnung zur Frequenzversorgung einer Rechenschaltung (6), insbesondere einem Mikroprozessor, mit einem ersten langsam anschwingenden Oszillator (2), insbesondere einem Quarzoszillator, einem zweiten schnell anschwingenden Oszillator (3), insbesondere einem RC-Oszillator, und einer Versorgungsspannungsquelle, dadurch gekennzeichnet, daß Schaltmittel (7) vorgesehen sind, die beim Auftreten einer Spannung von der Versorgungsspannungsquelle zunächst den schnell anschwingenden Oszillator (3) mit dem Frequenzeingang der Rechenschaltung (6) verbinden und nach einer vorgegebenen Dauer den Frequenzeingang der Rechenschaltung (6) auf den langsam anschwingenden Oszillator (2) umschalten.

2. Schaltungsanordnung nach Anspruch 1, dadurch gekennzeichnet, daß eine Vergleichsanordnung (4) vorgesehen ist, der die Ausgangssignale des langsam anschwingenden Oszillators (2) und die Ausgangssignale des schnell anschwingenden Oszillators (3) zugeführt werden, und daß durch die Vergleichsanordnung (4) über die Schaltmittel (7) die Verbindung mit dem langsam anschwingenden Oszillator (2) erfolgt, wenn die Frequenz des langsam anschwingenden Oszillators (2) in etwa die Frequenz des schnell anschwingenden Oszillators (3) erreicht hat und daß dadurch die vorgegebene Dauer bestimmt wird, mit der die Rechenschaltung (6) mit dem schnell anschwingenden Oszillator (3) verbunden ist.

3. Schaltungsanordnung nach Anspruch 1, dadurch gekennzeichnet, daß dem langsam anschwingenden Oszillator (2) Zählmittel (10) nachgeschaltet sind, und daß über Schaltmittel (7) die Verbindung mit dem langsam anschwingenden Oszillator (2) erfolgt, wenn das Zählmittel (10) einen vorgegebenen Zählerstand erreicht hat und daß dadurch die Dauer bestimmt wird, mit der die Rechenschaltung mit dem langsam anschwingenden Oszillator (2) verbunden ist.

4. Schaltungsanordnung nach einem der vorhergehenden Ansprüche, dadurch gekennzeichnet, daß das Schaltsignal für das Schaltmittel (7) einem Eingang (F) der Rechenschaltung (6) zugeführt wird.

5. Schaltungsanordnung nach einem der vorhergehenden Ansprüche, dadurch gekennzeichnet, daß ein Rücksetzschaltkreis (8) vorgesehen ist, der der Rechenschaltung (6) nach einer vorgegebenen Anzahl von Schwingungen am Takteingang der Rechenschaltung (6) den Rücksetzeingang (R) freigibt.

6. Schaltungsanordnung nach einem der vorhergehenden Ansprüche, dadurch gekennzeichnet, daß eine Spannungsüberwachungsanordnung (5) mit der Versorgungsspannungsquelle (1) in Verbindung steht und daß die Oszillatoren (2, 3) in Betrieb genommen werden bzw. freigeschaltet werden, wenn die Spannung einen vorgegebenen Wert erreicht hat.

## Claims

1. Circuit arrangement for supplying frequency to an arithmetic circuit (6), in particular a microprocessor, having a first oscillator (2) with a slow build-up, in particular a quartz oscillator, a second oscillator (3) with a fast build-up, in particular an RC oscillator, and a supply voltage source, characterized in that switching means (7) are provided which initially connect the oscillator (3) with the fast build-up to the frequency input of the arithmetic circuit (6) when a voltage from the supply voltage source appears, and after a predetermined time switch over the frequency input of the arithmetic circuit (6) to the oscillator (2) with the slow build-up.

2. Circuit arrangement according to Claim 1, characterized in that a comparator arrangement (4) is provided, to which the output signals of the oscillator (2) with the slow build-up and the output signals of the oscillator (3) with the fast build-up are supplied, and in that the connection to the oscillator (2) with the slow build-up takes place via the switching means (7) by means of the comparator arrangement (4) when the frequency of the oscillator (2) with the slow build-up has approximately reached the frequency of the oscillator (3) with the fast build-up, and in that as a result the predetermined duration for which the arithmetic circuit (6) is connected to the oscillator (3) with the fast build-up is determined.

3. Circuit arrangement according to Claim 1, characterized in that counting means (10) are connected downstream of the oscillator (2) with the slow build-up, and in that the connection to the oscillator (2) with the slow build-up takes place via switching means (7) when the counting means (10) has reached a predetermined counter reading, and in that as a result the duration for which the arithmetic circuit is connected to the oscillator (2) with the slow build-up is determined.

4. Circuit arrangement according to one of the preceding claims, characterized in that the switching signal for the switching means (7) is supplied to an input (F) of the arithmetic circuit (6).

5. Circuit arrangement according to one of the preceding claims, characterized in that a reset circuit (8) is provided which enables the reset input (R) of the arithmetic circuit (6) after a predetermined number of oscillations at the clock input of the arithmetic circuit (6).

6. Circuit arrangement according to one of the preceding claims, characterized in that a voltage monitoring arrangement (5) is connected to the supply voltage source (1), and in that the oscillators (2, 3) are put into operation or disconnected when the voltage has reached a predetermined value.

## Revendications

1. Circuit d'alimentation en fréquences d'un circuit de calcul (6), notamment d'un microprocesseur comportant un premier oscillateur (2) à démarrage lent, notamment un oscillateur à quartz et un second oscillateur (3) à démarrage rapide, notamment un oscillateur (RC) ainsi qu'une source de tension d'alimentation, circuit caractérisé par des moyens de commutation (7) qui, à l'arrivée d'une tension de la source d'alimentation en tension, relient tout d'abord l'oscillateur à démarrage rapide (3) à l'entrée de fréquence du circuit de calcul (6) et commutent l'entrée de fréquence du circuit de calcul (6) sur l'oscillateur à démarrage plus lent (2) après une durée prédéterminée.

2. Circuit selon la revendication 1, caractérisé par un comparateur (4) qui compare les signaux de sortie de l'oscillateur à démarrage lent (2) et les signaux de sortie de l'oscillateur à démarrage rapide (3) et le comparateur (4) assure par le moyen de commutation (7), la liaison avec l'oscillateur à démarrage lent (2) lorsque la fréquence de l'oscillateur à démarrage lent (2) atteint sensiblement la fréquence de l'oscillateur à démarrage rapide (3) et définit ainsi la durée prédéterminée pendant laquelle le circuit de calcul (6) est reliée à l'oscillateur à démarrage rapide (3).

3. Circuit selon la revendication 1, caractérisé en ce qu'un moyen de calcul (10) est branché en aval de l'oscillateur à démarrage lent (2) et un moyen de commutation (7) assure la liaison avec l'oscillateur à démarrage lent (2) lorsque le moyen de calcul (10) atteint un état de comptage prédéterminé et définit ainsi la durée pendant laquelle le circuit de calcul est relié à l'oscillateur à démarrage lent (2).

4. Circuit selon l'une des revendications précédentes, caractérisé en ce que le signal de commutation du moyen de commutation (7) est appliqué à une entrée (F) du circuit de calcul (6).

5. Circuit selon l'une des revendications précédentes, caractérisé par un circuit de remise à l'état initial (8) qui libère l'entrée de remise à l'état initial (R) pour le circuit de calcul (6) après un nombre prédéterminé d'oscillations appliquées à l'entrée d'horloge du circuit de calcul (6).

6. Circuit selon l'une des revendications précédentes, caractérisé par un montage de surveillance de tension (5) relié à la source d'alimentation sous tension (1) et les oscillateurs (2, 3) sont mis en route ou sont libérés lorsque la tension atteint une valeur prédéterminée.
